Europäisches Patentamt

European Patent Office

Office européen des brevets

(19)

(11) Numéro de publication: **0 065 903**
**B1**

(12) **FASCICULE DE BREVET EUROPEEN**

(45) Date de publication du fascicule du brevet:
21.11.84

(51) Int. Cl.³: **A 23 C 1/04**, A 23 C 1/12

(21) Numéro de dépôt: **82400853.6**

(22) Date de dépôt: **07.05.82**

(54) Procédé de fabrication d'un produit en poudre tel que du lait en poudre, à partir d'un produit liquide tel que du lait, subissant un traitement thermique tel que pasteurisation ou stérilisation.

(30) Priorité: **15.05.81 FR 8109744**

(43) Date de publication de la demande:
**01.12.82 Bulletin 82/48**

(45) Mention de la délivrance du brevet:
**21.11.84 Bulletin 84/47**

(84) Etats contractants désignés:
**AT BE CH DE GB IT LI LU NL SE**

(56) Documents cités:
**FR - A - 2 460 696**
**FR - A - 2 462 180**
**GB - A - 1 055 424**

(73) Titulaire: **LAGUILHARRE S.A., 2, avenue du 18 Juin 1940, F-92500 Rueil Malmaison (FR)**

(72) Inventeur: **Cibolt, Jacques Jean, 164 Bis, rue de l'Université, F-75007 Paris (FR)**

(74) Mandataire: **Kedinger, Jean-Paul et al, c/o Cabinet Malemont 42, avenue du Président Wilson, F-75116 Paris (FR)**

BUNDESDRUCKEREI BERLIN

## Description

La présente invention concerne un procédé de fabrication d'un produit en poudre tel que du lait en poudre, à partir un produit liquide tel que du lait, qui consiste à soumettre le produit liquide à un traitement thermique tel que pasteurisation ou stérilisation, à le soumettre ensuite à une concentration par évaporation simple ou multiple effet, puis à sécher le concentré résultant par de l'air amené à une température déterminée appropriée aux opérations de séchage.

On sait que dans les installations laitières mettant en œuvre des procédés connus de ce type, il y a en sortie de l'unité d'évaporation, c'est-à-dire au niveau du condenseur, évacuation d'une quantité appréciable de vapeur. Toutefois, cette dernière est généralement d'un degré thermique trop bas pour qu'elle puisse céder efficacement sa chaleur latente à l'eau du condenseur; il en résulte la production d'une eau qui est à une température trop peu élevée pour pouvoir trouver des applications intéressantes. En d'autres termes, les calories contenues dans la vapeur arrivant au niveau du condenseur sont souvent purement et simplement perdues.

On connaît déjà des installations de concentration par évaporation et de séchage (voir brevets français 2 462 180 et 2 460 696) dans lesquelles l'air de l'atomiseur est préchauffé au moyen de condensats prélevés sur l'unité d'évaporation; les calories ainsi prélevées sur l'unité d'évaporation sont certes à un niveau thermique supérieur à celui des calories contenues dans la vapeur disponible en sortie de cette unité, mais cette façon de procéder ne permet pas une valorisation optimale des calories mises en œuvre au cours du traitement thermique et de la concentration par évaporation, une telle valorisation optimale étant le but de la présente invention. Pour ce faire, cette dernière propose un procédé qui se caractérise en ce qu'avant d'amener l'air à une température appropriée aux opérations de séchage, on le préchauffe en lui transférant des calories prélevées sur le produit liquide ayant subi le traitement thermique et non encore concentré.

L'invention consiste donc à utiliser les calories lorsqu'elles sont à leur niveau de température le plus élevé, c'est-à-dire à un niveau auquel leur transfert à un fluide, en l'occurrence de l'air, se fait de la manière la plus efficace possible. Ainsi, grâce à l'invention, il est possible d'obtenir de l'air à température relativement élevée utilisable sur son lieu de production pour le séchage du concentré produit par l'évaporation.

Selon une première variante, le prélèvement des calories et leur transfert sont réalisés par échange de chaleur entre tout ou partie du produit liquide ayant subi le traitement thermique et l'air à préchauffer.

Selon une seconde variante, le prélèvement des carlories et leur transfert sont réalisés par un premier échange de chaleur entre tout ou partie du produit liquide ayant subi le traitement thermique et un fluide de transfert intermédiaire, puis un second échange,entre le fluide intermédiaire, résultant du premier échange et l'air à préchauffer.

Dans un but d'économie du fluide de transfert intermédiaire, le fluide de transfert intermédiaire résultant du second échange de chaleur est réutilisé en tout ou partie comme fluide de transfert intermédiaire pour le premier échange de chaleur. En d'autres termes, ce fluide intermédiaire qui peut par exemple être de l'eau, circulera en circuit fermé.

Pour des questions évidentes d'économie, l'évaporation du produit ayant subi le traitement thermique sera de préférence du type à thermocompression de vapeur et/ou du type à recompression mécanique de vapeur.

Enfin, le séchage du concentré produit par l'évaporation sera de préférence réalisé par séchage-atomisation.

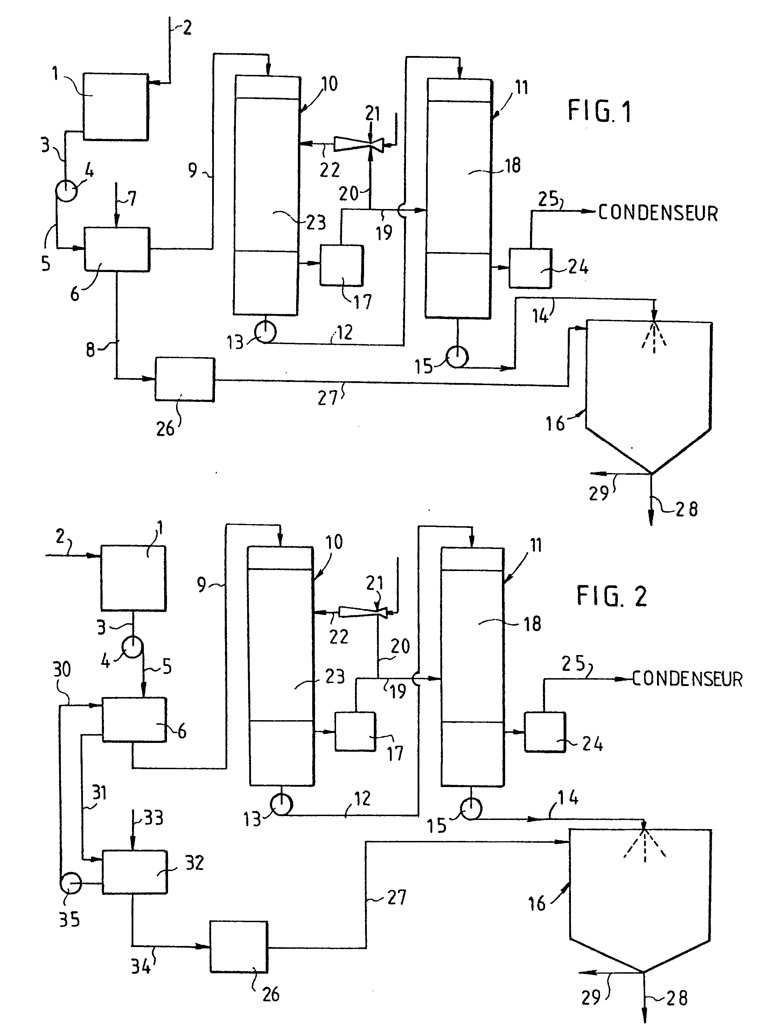

On décrira ci-après, à titre d'exemples, deux modes de réalisation de la présente invention en faisant référence au dessin annexé dont les figures 1 et 2 représentent schématiquement une installation de concentration-séchage où le traitement thermique est une pasteurisation et mettant en œuvre le procédé selon l'invention.

L'installation de la figure 1 comporte tout d'abord un pasteurisateur 1 dans lequel le produit à pasteuriser, par exemple du lait, est introduit par le conduit 2. Le lait pasteurisé est ensuite évacué du pasteurisateur 1 par un conduit 3 et une pompe 4, puis amené par un conduit 5 dans un échangeur de chaleur 6 du type à contact indirect. Dans cet échangeur, il y a transfert d'une partie des calories du lait pasteurisé à de l'air froid arrivant dans ce même échangeur 6 par un conduit 7 et en sortant, préchauffé, par un conduit 8. Le lair pasteurisé sensiblement refroidi issu de l'échangeur 6 est ensuite amené par un conduit 9 en tête du premier effet 10 d'un évaporateur à deux effets 10, 11. Le nombre d'effets de l'évaporateur est variable notamment selon le degré de concentration du lait à traiter et les performances de l'évaporateur lui-même, et il peut donc comporter un ou plusieurs effets, par exemple du type à flot tombant comme représenté sur les figures 1 et 2.

Le lait pasteurisé subit dont une première concentration dans cet effet 10 puis est amené de la base de ce dernier, par un conduit 12 et une pompe 13 en tête du second effet 11 où il subit une seconde concentration avant d'être dirigé par un conduit 14 et une pompe 15 au sommet d'un sécheuratomiseur 16 de conception classique et bien connu de l'Homme de l'Art.

La vapeur d'évaporation créée dans le premier effet 10 est acheminée vers un séparateur liquide-vapeur 17, puis vers le corps de chauffe 18 de l'effet 11 par un conduit 19. Ce dernier porte une dérivation 20 aboutissant à l'aspiration d'un thermocompresseur de vapeur 21 dont le conduit de refoulement 22 aboutit dans le corps de chauffe 23 de l'effet 10. Il est possible également de disposer un compresseur mécanique de vapeur sur le conduit 20 ou encore de remplacer le thermocompresseur de vapeur 21 par un compresseur mécanique de vapeur.

La vapeur d'évaporation créée dans l'effet 11 est pour sa part dirigée vers un séparateur liquide-vapeur 24 et de là vers un condenseur (non représenté) par un conduit 25.

L'air préchauffé sortant de l'échangeur 6 est amené par le conduit 8 dans un second échangeur de chaleur 26, puis de là par un conduit 27 dans le sécheur-atomiseur 16. Ce second échangeur 26 dans lequel l'air préchauffé est porté à la température désirée appropriée aux opérations de séchage, peut être du type à contact indirect sur gaz chauds tels que la vapeur surchauffée. Il peut également être constitué par un dispositif de chauffage direct classique. Enfin, le lait en poudre produit dans le sécheur 16 et l'air sont évacués dudit sécheur, respectivement par les conduits 28 et 29.

La variante selon la figure 2 comporte les mêmes éléments constitutifs 1 à 6 et 9à 29 que l'installation objet de la figure 1. Seul diffère le mode de prélèvement et de transfert à l'air des calories du lait pasteurisé provenant du pasteurisateur 1. Plus précisément, dans l'échangeur de chaleur 6 un fluide de tranfert de chaleur, de préférence de l'eau, est chauffé au moyen des calories prélevées sur le lait pasteurisé. Ce fluide arrive dans l'échangeur 6 par un conduit 30 et en sort, réchauffé, par un conduit 31 qui aboutit par ailleurs à un échangeur de chaleur à contact indirect 32 où il préchauffé à son tour de l'air arrivant dans ce dernier parun conduit 33 en sortant par un conduit 34 débouchant dans l'échangeur de chaleur 26. Le fluide de transfert, une fois ses calories cédées à l'air, s'en retourne vers l'échangeur 6 sous l'effet d'une pompe 35 dont le refoulement est relié au conduit 30.

## Revendications

1. Procédé de fabrication d'un produit en poudre à partir d'un produit liquide, en particulier du lait, qui consiste à soumettre le produit liquide à un traitement thermique, à le soumettre ensuite à une concentration par évaporation simple ou multiple effet, puis à sécher le concentré résultant par de l'air amené à une température déterminée appropriée aux opérations de séchage, procédé caractérisé en ce qu'avant d'amener l'air à cette température déterminée, on le préchauffe en lui transférant des calories prélevées sur le produit liquide ayant subi le traitement thermique et non encore concentré.

2. Procédé selon la revendication 1, caractérisé en ce que le prélèvement de calories et leur transfert sont réalisés par échange de chaleur entre tout ou partie du produit liquide ayant subi le traitement thermique et l'air à préchauffer.

3. Procédé selon la revendication 1, caractérisé en ce que le prélèvement de calories et leur transfert sont réalisés par un premier échange de chaleur entre tout ou partie du produit liquide ayant subi le traitement thermique et un fluide de transfert intermédiaire, puis un second échange de chaleur entre le fluide intermédiaire résultant du premier échange et l'air à préchauffer.

4. Procédé selon la revendication 3, caractérisé en ce que le fluide de transfert intermédiaire résultant du second échange de chaleur est réutilisé en tout ou partie comme fluide de transfert intermédiaire pour le premier échange de chaleur.

5. Procédé selon la revendication 3 ou 4, caractérisé en ce que le fluide intermédiaire de transfert est de l'eau.

6. Procédé selon l'une quelconque des revendications précédentes, caractérisé en ce que concentré produit par l'évaporation est séché par séchageatomisation.

7. Procédé selon l'une quelconque des revendications précédentes, caractérisé en ce que l'évaporation est du type à thermocompression de vapeur et/ou à recompression mécanique de vapeur.

## Patentansprüche

1. Verfahren zur Herstellung eines Pulverprodukts aus einem flüssigen Produkt, insbesondere Milch, das darin besteht, das flüssige Produkt einer Wärmebehandlung zu unterwerfen, es dann einer Konzentration durch ein- oder mehrstufiges Eindampfen zu unterwerfen, dann das anfallende Konzentrat durch auf eine bestimmte, für die Trocknungsvorgänge angebrachte Temperatur gebrachte Luft zu trocknen, dadurch gekennzeichnet, daß man, bevor die Luft auf diese bestimmte Temperatur gebracht wird, sie vorerwärmt, indem die dem flüssigen Produkt, das die Wärmebehandlung erfahren hat und noch nicht konzentriert ist, entnommenen Kalorien auf sie übertragen werden.

2. Verfahren nach Anspruch 1, dadurch gekennzeichnet, daß die Entnahme der Kalorien und ihre Übertragung durch Wärmeaustausch zwischen dem gesamten oder einem Teil des flüssigen Produkts, das die Wärmebehandlung erfahren hat, und der vorzuerwärmenden Luft erfolgen.

3. Verfahren nach Anspruch 1, dadurch gekennzeichnet, daß die Entnahme von Kalorien und deren Übertragung durch einen ersten Wärmeaustausch zwischen dem gesamten oder einem Teil des flüssigen Produkts, das die Wärmebehandlung erfahren hat, und einem zwischengeschalteten Übertragungsfluid, dann einen zweiten Wärmeaustausch zwischen dem aus dem ersten Austausch kommenden zwischengeschalteten Fluid und der vorzuerwärmenden Luft erfolgen.

4. Verfahren nach Anspruch 3, dadurch gekennzeichnet, daß das dem zweiten Wärmeaustausch kommende zwischengeschaltete Übertragungsfluid ganz oder teilweise als zwischengeschaltetes Übertragungsfluid für den ersten Wärmeaustausch wiederverwendet wird.

5. Verfahren nach Anspruch 3 oder 4, dadurch gekennzeichnet, daß das zwischengeschaltete Übertragungsfluid Wasser ist.

6. Verfahren nach irgendeinem der vorhergehenden Ansprüche, dadurch gekennzeichnet, daß das durch das Eindampfen erzeugte Konzentrat durch Trocknung/Zerstäubung getrocknet wird.

7. Verfahren nach irgendeinem der vorhergehenden Ansprüche, dadurch gekennzeichnet, daß das Eindampfen von der Art der Dampf-Thermokompression und/oder der mechanischen Dampf-Rekompression ist.

## Claims

1. A process for manufacturing a powder product a liquid product, in particular milk, which consists in subjecting the liquid product to heat treatment, then in subjecting it tho concentration by a single or multiple stage evaporation, then in drying the resultant concentrate by means of air brought to a given temperature appropriate to the drying operations, which process is characterized in that, before bringing the air to this given temperature, it is preheated by transferring thereto heat taken from the liquid product which has undergone the heat treatment and is not yet concentrated.

2. The process according to claim 1, characterized in that the taking of heat and transfer thereof are achieved by heat exchanging between all or part of the liquid product which has undergone the heat treatment and the air to be preheated.

3. The process according to claim 1, characterized in that the taking of heat and transfer thereof are achieved by a first heat exchange between all or part of the liquid product which has undergone the heat treatment and an intermediate transfer fluid, then a second heat exchange between the intermediate fluid resulting from the first exchange and the air to be preheated.

4. The process according to claim 3, characterized in that the intermediate transfer fluid resulting from the second heat exchange is reused as a whole or in part as intermediate transfer fluid for the first heat exchange.

5. The process according to claim 3 or 4, characterized in that the intermediate transfer fluid is water.

6. The process according to any one of the preceding claims, characterized in that the concentrate produced by evaporation is dried by spray drying.

7. The process according to any one of the preceding claims, characterized in that the evaporation is of the vapor thermocompression and/or vapor mechanical recompression type.

FIG. 1

CONDENSEUR

FIG. 2

CONDENSEUR